# FASCICULE DE BREVET EUROPEEN

(11) **EP 1 020 677 B1**
(45) Date de publication et mention de la délivrance du brevet: **09.04.2003**
(21) Numéro de dépôt: 00400047.7
(22) Date de dépôt: 11.01.2000
(51) Int. Cl.: F16L 37/084

(54) **Ensemble de connexion d'une extrémité de conduite à un élément**
Verbinderanordnung
Connector assembly

(30) Priorité: 15.01.1999 FR 9900386
(43) Date de publication de la demande: 19.07.2000
(73) Titulaire: LEGRIS S.A., F-35000 Rennes (FR)
(72) Inventeur: Le Quere, Philippe, 35830 Betton (FR)
(74) Mandataire: Robert, Jean-Pierre

(56) Documents cités:
- EP-A- 0 333 937
- EP-A- 0 655 577
- DE-A- 4 304 241
- GB-A- 2 182 743

## Description

La présente invention concerne un ensemble de connexion d'une extrémité de conduite à un élément d'un circuit conducteur de fluides sous pression, tel qu'une autre conduite, un réservoir ou une pompe.

On connaît des raccords qui comportent une partie de liaison à l'élément et un manchon tubulaire de liaison à la conduite ayant une extrémité solidaire de la partie de liaison à l'élément et une extrémité opposée libre par laquelle l'extrémité de conduite est destinée à être introduite dans le manchon tubulaire. Le manchon tubulaire est généralement pourvu d'un joint torique assurant l'étanchéité du raccordement à l'extrémité de la conduite et de moyens de retenue de l'extrémité de conduite dans le manchon tubulaire.

Les moyens de retenue sont généralement constitués par une rondelle à griffes s'étendant entre le joint et l'extrémité libre du manchon. Les griffes sont déformables entre une position de retenue dans laquelle les griffes sont en saillie à l'intérieur du manchon tubulaire pour mordre dans la surface extérieure de la conduite et une position de dégagement dans laquelle les griffes sont déformées pour être radialement écartées de la conduite. Un moyen de déconnexion est couramment prévu sous la forme d'un poussoir reçu à coulissement dans l'extrémité libre du manchon tubulaire et dont une extrémité est conformée pour venir s'intercaler entre les dents et la conduite et les écarter de celle-ci. De tels raccords sont notamment décrits dans le document EP 0 333 937.

Afin d'obtenir une étanchéité et une résistance mécanique suffisantes du raccordement, il est nécessaire que la conduite soit reçue dans le manchon tubulaire avec un jeu minimum. Pour cette raison, le manchon tubulaire comprend de part et d'autre du joint d'étanchéité et des griffes déformables donc à chacune de ses extrémités une section de guidage de la conduite. La section de guidage adjacente à l'extrémité libre du manchon tubulaire est en pratique formée par le poussoir. Cependant, le poussoir est monté avec jeu dans l'extrémité libre du manchon tubulaire de manière à permettre son coulissement. Il en résulte une relative faiblesse du guidage de la conduite à ce niveau qui peut débattre dans le manchon tubulaire, ce qui risque de provoquer une dégradation de l'étanchéité et/ou de la résistance du raccordement.

Pour limiter ce risque, la section de guidage adjacente à l'extrémité du manchon tubulaire opposée à l'extrémité libre de celui-ci est relativement longue, au détriment de l'encombrement du raccord contraire aux exigences de compacité des installations ayant cours actuellement. On a également pensé à fixer dans l'extrémité libre du manchon tubulaire, par clipsage indémontable ou sertissage, une douille de guidage comportant une partie cannelée et recevant à coulissement un poussoir crénelé. Le guidage de l'extrémité de conduite est alors assuré par les parties en saillie des cannelures, tandis que la déformation des griffes est réalisée par les parties crénelées du poussoir reçues dans les parties creuses des cannelures de la douille de guidage. Un inconvénient d'une telle réalisation réside dans le fait que lors de la déconnexion, seules les griffes se trouvant en regard de parties crénelées, sont déformées. Il existe donc un risque que des griffes restent au moins partiellement en prise sur l'extrémité de conduite lors du retrait de celle-ci et occasionnent des rayures de cette extrémité qui pourront devenir une source de fuite lors d'une reconnexion ultérieure de l'extrémité de conduite.

Il serait donc intéressant de disposer d'un ensemble de connexion assurant un raccordement efficace d'une extrémité de conduite à un élément tout en permettant une déconnexion aisée de l'extrémité de conduite.

A cet effet, on prévoit, selon l'invention, un ensemble de connexion d'une extrémité de conduite à un élément, comprenant un raccord qui comporte une partie de liaison à l'élément et un manchon tubulaire de liaison à l'extrémité de conduite, le manchon tubulaire ayant une extrémité solidaire de la partie de liaison à l'élément et une extrémité opposée libre par laquelle l'extrémité de conduite est destinée à être introduite dans le manchon tubulaire et étant pourvue de moyens internes de retenue de l'extrémité de conduite qui comprennent des griffes déformables entre un état de retenue dans lequel les griffes au repos sont en saillie à l'intérieur du manchon tubulaire et un état de dégagement dans lequel les griffes sont déformées pour être escamotées par rapport à leur position en saillie, l'ensemble comprenant en outre des moyens de déconnexion agencés pour provoquer la déformation des griffes, le raccord comprenant une douille amovible de guidage de l'extrémité de conduite dans le manchon tubulaire, la douille de guidage étant agencée pour coopérer par vissage avec l'extrémité libre du manchon tubulaire, et les moyens de déconnexion comprenant une bague comportant des moyens de son enfilage radial sur l'extrémité de conduite, la bague étant agencée pour coopérer par vissage avec l'extrémité libre du manchon tubulaire à la place de la douille de guidage, la bague ayant alors une extrémité en appui sur les griffes de manière à déformer celles-ci.

Ainsi, la douille de guidage, vissée dans l'extrémité libre du manchon tubulaire, présente une ouverture pour l'introduction de la conduite avec un jeu réduit et peut de ce fait assurer un guidage précis de cette conduite et autorise une longueur de guidage de l'extrémité de conduite du côté de la partie de liaison plus faible. L'encombrement du raccord peut de la sorte être réduit. Par ailleurs, la douille de guidage étant amovible, il est possible de la retirer pour procéder à un changement des moyens d'étanchéité ou des moyens de retenue afin d'assurer la maintenance du raccord. Avec cette structure, la bague de déconnexion peut être agencée pour agir sur l'ensemble des griffes. Les risques de rayures de l'extrémité de conduite sont donc limités. En outre, le poussoir formant le moyen de déconnexion de l'art antérieur était dans certaines conditions de manipulation difficile car demandant un effort important pour permettre la déconnexion. Les moyens de déconnexion de l'invention coopérant par vissage avec l'extrémité de conduite ne demande qu'un effort limité pour leur manoeuvre. Enfin, le poussoir de l'art antérieur, étant toujours en position sur le raccord, pouvait être actionné par une personne non autorisée. Avec l'invention, la déconnexion ne peut être réalisée que par une personne disposant des moyens de déconnexion.

Selon un mode de réalisation avantageux, la bague comprend deux parties reliées longitudinalement par une portion souple formant charnière, la bague comportant de préférence une portion de surface externe de section polygonale destinée à s'étendre à l'extérieur du manchon tubulaire pour coopérer avec un outil de manoeuvre. La structure de la bague est alors particulièrement simple et rend aisée sa manipulation.

De préférence, la bague a une extrémité opposée à l'extrémité d'appui qui comporte au moins un ergot s'étendant axialement, et la douille de guidage a une extrémité opposée à la partie de liaison dans laquelle est ménagé un perçage s'étendant axialement pour coopérer avec l'ergot de la bague. La bague permet alors d'une part de dévisser la douille de guidage et d'autre part de déformer les griffes pour permettre l'extraction de l'extrémité de conduite. Les moyens de déconnexion étant spécifiques à l'ensemble de raccordement, la possibilité de déconnecter l'extrémité de conduite n'est offerte qu'aux personnes possédant la bague de déconnexion.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue partielle en coupe longitudinale d'un raccord d'un ensemble de connexion conforme à un premier mode de réalisation de l'invention,
- la figure 2 est une vue analogue à la figure 1 du raccord associé à une extrémité de conduite,
- la figure 3 est une vue analogue à la figure 2, le raccord étant équipé de la bague de déconnexion,
- la figure 4 est une vue en perspective de la bague de déconnexion,
- la figure 5 est une vue partielle en coupe longitudinale d'un raccord d'un ensemble de connexion conforme à un deuxième mode de réalisation de l'invention,
- la figure 6 est une demi-vue en coupe longitudinale d'une bague de déconnexion du deuxième mode de réalisation de l'invention.

En référence aux figures, l'ensemble de connexion selon l'invention est destiné au raccordement d'une extrémité de conduite C à un élément d'un circuit conducteur de fluide sous pression. Cet élément peut être un organe émetteur ou récepteur de fluide tel qu'une autre extrémité de conduite, une pompe, un réservoir ou autre.

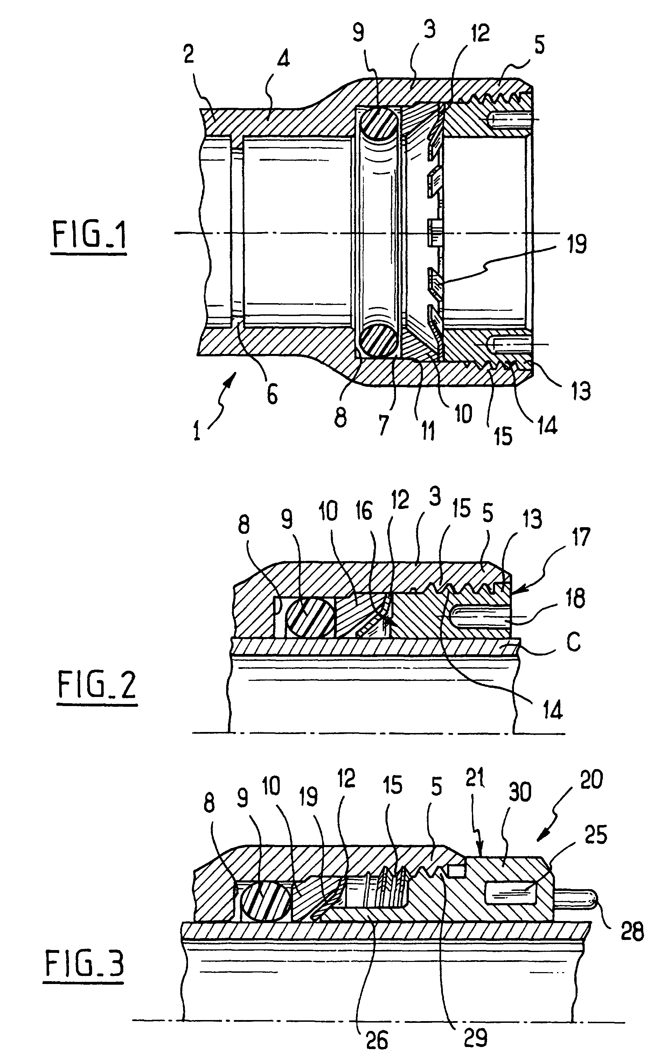

En référence aux figures 1 et 2, l'ensemble de connexion comprend un raccord généralement désigné en 1 comportant une partie 2 de liaison à l'élément et un manchon tubulaire 3 de liaison à l'extrémité de conduite C. La partie de liaison 2 peut être formée d'un manchon tubulaire identique au manchon tubulaire 3 ou d'une partie de l'élément à connecter.

Le manchon tubulaire 3 a une portion d'extrémité 4 solidaire de la partie de liaison 2 et une extrémité opposée 5 libre par laquelle l'extrémité de conduite C est destinée à être introduite dans le manchon tubulaire 3. La portion d'extrémité 4 a un diamètre interne sensiblement égal au diamètre externe de l'extrémité de conduite C et se termine, du côté de la partie de liaison 2, par un épaulement annulaire 6 contre lequel l'extrémité de conduite C est destiné à venir en butée.

Le manchon tubulaire 3 comprend un chambrage interne 7 de diamètre supérieur au diamètre externe de l'extrémité de la conduite C s'étendant à partir de l'extrémité libre 5 et se raccordant à la portion d'extrémité 4 par un épaulement 8 annulaire. A partir de l'épaulement 8, sont disposés dans le chambrage 7 un joint torique 9, une bague de butée 10 bloquée sur un redan annulaire 11 du chambrage 7, une rondelle à griffes 12 et une douille de guidage 13.

La bague de butée 10 a un alésage interne conique et est disposée de manière que sa grande ouverture soit orientée du côté de la rondelle à griffes 12.

La douille de guidage 13 a un diamètre interne sensiblement égal au diamètre externe de l'extrémité de conduite C.

La rondelle à griffes 12 est serrée contre la bague de butée 10 par la douille de guidage 13 qui présente extérieurement un filetage 14 coopérant avec une partie taraudée 15 de l'extrémité libre 5. La douille de guidage 13 a alors une face d'extrémité 16 en appui contre la rondelle à griffes 12 et une face d'extrémité 17 opposée affleurant l'extrémité libre 5 du manchon tubulaire.

La douille de guidage assure ainsi, outre une fonction de guidage de l'extrémité de conduite C dans le manchon tubulaire 3, une fonction de blocage de la rondelle à griffes 12. La retenue de l'extrémité de conduite C est assurée par les griffes 19 de la rondelle à griffes 12 qui s'étendent au repos dans une position de retenue dans laquelle les griffes sont en saillie à l'intérieur du manchon tubulaire 3 pour être en prise avec l'extrémité de conduite C lorsque celle-ci est introduite dans le manchon tubulaire 3 (voir figure 2).

Les griffes 19 de la rondelle à griffes 12 sont élastiquement déformables jusqu'à une position de dégagement dans laquelle les griffes sont escamotées par rapport à leur position en saillie. Les griffes 19 sont amenées dans leur position de dégagement par l'intermédiaire d'une bague de déconnexion qui va maintenant être décrite.

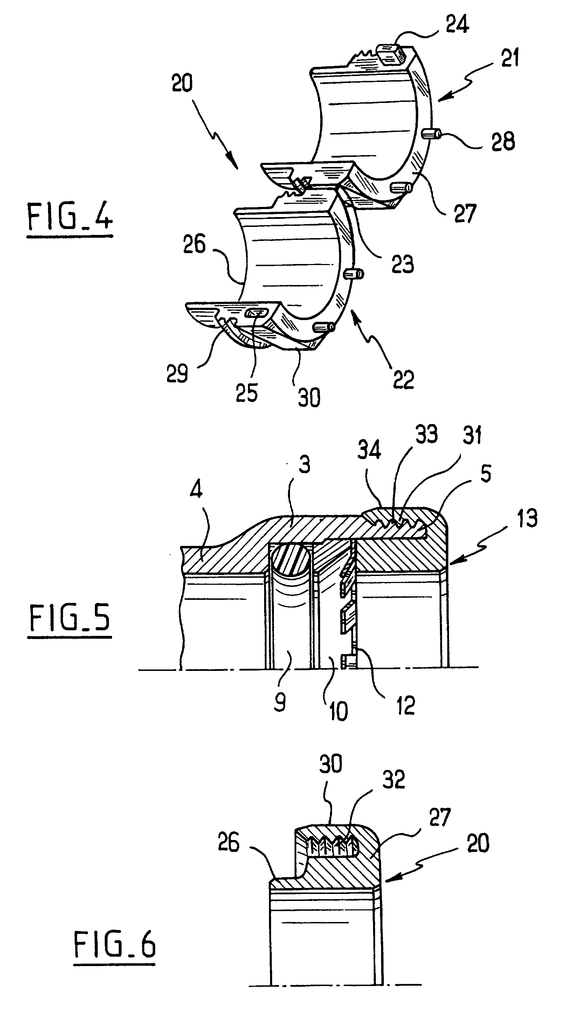

En référence aux figures 3 et 4, la bague de déconnexion, généralement désignée en 20, comprend deux parties semi-cylindriques 21 et 22 ayant deux bords longitudinaux reliés l'un à l'autre par une portion souple 23 formant charnière. La bague de déconnexion est par exemple réalisée en matière plastique par injection. La partie 21 comprend sur son bord longitudinal opposé à la portion souple 23 un ergot 24 en saillie destiné à coopérer avec un logement 25 réalisé dans le bord longitudinal de la partie 22 opposée à la portion souple 23. Les éléments 24 et 25 permettent d'assurer un positionnement relatif relativement précis des parties 21 et 22 lorsque celles-ci sont refermées l'une sur l'autre par flexion de la portion souple 23.

En position fermée, la bague de déconnexion 20 comprend une extrémité 26 cylindrique conformée pour venir au contact des extrémités libres des griffes 19 et provoquer la déformation des griffes 19 jusqu'à leur position de dégagement et une extrémité opposée 27 à partir de laquelle s'étendent axialement des ergots 28 destinés à coopérer avec des perçages 18 réalisés dans la face d'extrémité 17 pour s'étendre parallèlement à l'axe central de la douille de guidage 13.

La bague de déconnexion 20 présente une portion de surface externe filetée 29 adjacente à l'extrémité 26 et agencée pour coopérer avec la partie taraudée 15 et une portion de surface externe 30 de section polygonale adjacente à l'extrémité 27.

En référence aux figures 1 et 2, on peut voir que lorsque l'extrémité de conduite C est introduite dans le manchon tubulaire 3, les griffes 19 viennent mordre la surface externe de cette extrémité de conduite et retiennent celle -ci.

Pour déconnecter la conduite C, la bague de déconnexion 20 est refermée sur l'extrémité de conduite C de manière que les ergots 28 puissent être engagés dans les perçages 18. La bague de déconnexion 20 est alors pivotée à l'aide d'un outil, tel qu'une clé plate, engagé sur la portion de surface externe 30, pour dévisser la douille de guidage 13.

La douille de guidage 13 est ensuite glissée le long de la conduite C de manière à libérer l'ouverture de l'extrémité libre 5 du manchon tubulaire 3. La bague de déconnexion est ensuite retirée pour être refermée à nouveau sur la conduite C mais, cette fois-ci, de manière que l'extrémité 26 soit engagée dans l'extrémité libre 5 du manchon tubulaire 3. La bague de déconnexion 20 est ensuite vissée dans le manchon tubulaire 3 jusqu'à ce que l'extrémité 26 vienne en appui des griffes 19 et déforme celles-ci jusqu'à les amener dans leur position de dégagement. Les griffes 19 ne mordent alors plus la surface externe de la conduite C de sorte que celle-ci peut être retirée.

On notera qu'une fois la douille de guidage 13 retirée, il est possible d'extraire le joint 9 pour procéder à son remplacement.

En variante, telle que représentée aux figures 5 et 6, on pourra prévoir que l'extrémité libre 5 présente une surface externe filetée 33 destinée à coopérer avec un taraudage annulaire 31 ménagé dans la douille de guidage 13 et avec un taraudage annulaire 32 ménagé dans la bague de déconnexion 20 parallèlement à l'axe central de celle-ci. Dans cette variante, la surface externe 34 de la douille de guidage 13 peut avoir une forme polygonale de manière à pouvoir coopérer avec un outil de manoeuvre tel qu'une clé plate.

Bien entendu l'invention n'est pas limitée au mode de réalisation décrit et on peut y apporter des variantes de réalisation sans sortir du cadre de l'invention tel que défini par les revendications.

## Revendications

1. Ensemble de connexion d'une extrémité de conduite à un élément d'un circuit conducteur de fluide, l'ensemble comprenant un raccord (1) qui comporte une partie de liaison à l'élément (2) et un manchon tubulaire (3) de liaison à l'extrémité de conduite, le manchon tubulaire (3) ayant une extrémité (4) solidaire de la partie de liaison à l'élément et une extrémité opposée libre (5) par laquelle l'extrémité de conduite est destinée à être introduite dans le manchon tubulaire et étant pourvue de moyens internes (12) de retenue de l'extrémité de conduite qui comprennent des griffes (19) déformables entre un état de retenue dans lequel les griffes au repos sont en saillie à l'intérieur du manchon tubulaire et un état de dégagement dans lequel les griffes sont déformées pour être escamotées par rapport à leur position en saillie, l'ensemble comprenant en outre des moyens de déconnexion agencés pour provoquer la déformation des griffes, **caractérisé en ce que** le raccord comprend une douille amovible de guidage (13) de l'extrémité de conduite dans le manchon tubulaire, la douille de guidage (13) étant agencée pour coopérer par vissage avec l'extrémité libre (5) du manchon tubulaire (3), et **en ce que** les moyens de déconnexion comprennent une bague (20) comportant des moyens (23) de son enfilage radial sur l'extrémité de conduite, la bague étant agencée pour coopérer par vissage avec l'extrémité libre du manchon tubulaire à la place de la douille de guidage, la bague ayant alors une extrémité (26) en appui sur les griffes (19) de manière à déformer celles-ci.

2. Ensemble de connexion selon la revendication 1, **caractérisé en ce que** la bague (20) comprend deux parties (21, 22) reliées longitudinalement par une portion souple (23) formant charnière.

3. Ensemble de connexion selon la revendication 1 ou la revendication 2, **caractérisé en ce que** la bague (20) comporte une portion de surface externe (30) destinée à s'étendre à l'extérieur du manchon tubulaire (3) et agencée pour coopérer avec un outil de manoeuvre.

4. Ensemble de connexion selon la revendication 3, **caractérisé en ce que** la portion de surface externe (30) de la bague (20) a une section polygonale.

5. Ensemble de connexion selon l'une des revendications 1 à 4, **caractérisé en ce que** la bague (20) a une extrémité (21) opposée à l'extrémité d'appui (26) qui comporte au moins un ergot (28) s'étendant axialement, et **en ce que** la douille de guidage a une extrémité (17) opposée à la partie de liaison dans laquelle est ménagé au moins un perçage (18) s'étendant axialement pour coopérer avec l'ergot (28) de la bague (20).

6. Ensemble de connexion selon la revendication 5, **caractérisé en ce que** l'extrémité (27) de la douille de guidage (13) pourvue d'un perçage est affleurante avec l'extrémité libre (5) du manchon tubulaire (3) lorsqu'elle est en position dans celui-ci.

7. Ensemble de connexion selon l'une quelconque des revendications précédentes, **caractérisé en ce que** l'extrémité libre (5) du manchon tubulaire (3) est taraudée, et **en ce que** la douille de guidage (13) et la bague (20) présentent extérieurement un filetage (14, 29).

## Claims

1. A connection assembly for connecting a pipe end to an element of a circuit transporting fluid, the assembly comprising a coupling (1) which has a link portion (2) for linking to the element and a tubular sleeve (3) for linking to the pipe end, the tubular sleeve (3) having one end (4) secured to the element link portion and an opposite end (5) that is free and that is suitable for receiving the pipe end when it is inserted into the tubular sleeve, the free end being provided with internal retaining means (12) for retaining the pipe end and having claws (19) that are deformable between a retaining state in which the claws at rest project into the tubular sleeve and a disengagement state in which the claws are deformed so as to be retracted away from their projecting position, the assembly further comprising disconnection means organized to cause the claws to be deformed, the assembly being **characterized in that** the coupling has a removable guide socket (13) for guiding the pipe end in the tubular sleeve, the guide socket (13) being organized for screw co-operation with the free end (5) of the tubular sleeve (3), and **in that** the disconnection means comprise a ring (20) having means (23) enabling it to be engaged radially on the pipe end, the ring being organized for screw co-operation with the free end of the tubular sleeve in the place of the guide socket, the ring then having one end (26) bearing against the claws (19) so as to deform them.

2. A connection assembly according to claim 1, **characterized in that** the ring (20) has two portions (21, 22) that are connected together longitudinally by means of a hinge-forming flexible portion (23).

3. A connection assembly according to claim 1 or 2, **characterized in that** the ring (20) has an outside surface portion (30) designed to extend outside the tubular sleeve (3) and organized to co-operate with a driving tool.

4. A connection assembly according to claim 3, **characterized in that** the outside surface portion (30) of the ring (20) is of polygonal section.

5. A connection assembly according to any one of claims 1 to 4, **characterized in that** the ring (20) has an end (21) remote from its bearing end (26) which includes at least one axially-extending stud (28), and **in that** the guide socket has an end (17) remote from the link portion and in which at least one hole (18) is formed that extends axially so as to co-operate with the stud (28) of the ring (20).

6. A connection assembly according to claim 5, **characterized in that** the end (27) of the guide socket (13) that is provided with a hole is flush with the free end (5) of the tubular sleeve (3) when the socket is in position therein.

7. A connection assembly according to any preceding claim, **characterized in that** the free end (5) of the tubular sleeve (3) is tapped, and **in that** the guide socket (13) and the ring (20) have respective outside threads (14, 29).

## Patentansprüche

1. Verbinderanordnung zum Verbinden eines Leitungsendes mit einem Element eines Leitungskreises für ein Fluid, umfassend einen Verbinder (1), der einen Abschnitt zur Verbindung mit dem Element (2) und eine ringförmige Buchse (3) zum Verbinden mit dem Leitungsende hat, wobei die ringförmige Buchse (3) ein Ende (4) hat, das einstückig mit dem Abschnitt zur Verbindung mit dem Element ausgebildet ist, und ein freies Ende (5) hat, an dem das Leitungsende in die ringförmige Buchse einzuführen ist und das innere Mittel (12) zum Halten des Leitungsendes hat, welche Klauen (19) umfassen, die zwischen einem Haltezustand, in dem die entspannten Klauen in das Innere der ringförmigen Buchse hervorstehen, und einem gelösten Zustand, in dem die Klauen verformt werden, um relativ zur hervorstehenden Stellung ausgelenkt zu werden, verformt werden können, wobei die Anordnung ferner Mittel zum Lösen der Verbindung umfaßt, die geeignet sind, die Verformung der Klauen auszulösen, **dadurch gekennzeichnet, daß** der Verbinder eine unbewegliche Hülse (13) zum Führen des Leitungsendes in die ringförmige Buchse umfaßt, die derart ausgebildet ist, daß sie durch eine Schraubverbindung mit dem freien Ende (5) der ringförmigen Buchse (3) zusammenwirkt, und daß die Mittel zum Lösen der Verbindung einen Ring (20) umfassen, der Mittel (23) zum radialen Aufsetzen auf das Leitungsende hat, wobei der Ring derart ausgebildet ist, daß er anstelle der Führungshülse mit dem freien Ende der ringförmigen Buchse verschraubt ist, wobei der Ring ein Ende (26) hat, das in Kontakt mit den Klauen (19) tritt, um diese zu verformen.

2. Verbinderanordnung nach Anspruch 1, **dadurch gekennzeichnet, daß** der Ring (20) zwei Abschnitte (21, 22) hat, die in Längsrichtung über einen biegsamen Bereich (23), der ein Scharnier bildet, miteinander verbunden sind.

3. Verbinderanordnung nach Anspruch 1 oder 2, **dadurch gekennzeichnet, daß** der Ring (20) einen äußeren Oberflächenabschnitt (30) hat, der dazu vorgesehen ist, sich außerhalb der ringförmigen Buchse (3) zu erstrecken, und der zum Zusammenwirken mit einem Betätigungswerkzeug ausgebildet ist.

4. Verbinderanordnung nach Anspruch 3, **dadurch gekennzeichnet, daß** der äußere Oberflächenabschnitt (30) des Rings (20) einen polygonalen Querschnitt hat.

5. Verbinderanordnung nach einem der Ansprüche 1 bis 4, **dadurch gekennzeichnet, daß** der Ring (20) ein dem Kontaktende (26) entgegengesetztes Ende (21) hat, das zumindest einen Stift (28) hat, der sich axial erstreckt, und daß die Führungshülse ein Ende (17) hat, das dem Verbindungsabschnitt entgegengesetzt ist und das zumindest eine Bohrung (18) aufweist, die sich axial erstreckt, um mit dem Stift (28) des Rings (20) zusammenzuwirken.

6. Verbinderanordnung nach Anspruch 5, **dadurch gekennzeichnet, daß** das mit einer Bohrung versehene Ende (27) der Führungshülse (13) mit dem freien Ende (5) der ringförmigen Buchse (3) fluchtet, wenn die Führungshülse in der Buchse angeordnet ist.

7. Verbinderanordnung nach einem der vorhergehenden Ansprüche, **dadurch gekennzeichnet, daß** das freie Ende (5) der ringförmigen Buchse (3) ein Innengewinde hat, und die Führungshülse (13) und der Ring (20) ein Außengewinde (14, 29) haben.
